Europäisches Patentamt

European Patent Office

Office européen des brevets

(19)

(11) Numéro de publication : **0 324 668 B1**

(12) **FASCICULE DE BREVET EUROPEEN**

(45) Date de publication du fascicule du brevet :
**09.12.92 Bulletin 92/50**

(51) Int. Cl.⁵ : **C10B 53/00**

(21) Numéro de dépôt : **89400037.1**

(22) Date de dépôt : **06.01.89**

(54) **Système pour la transformation de résidus.**

(30) Priorité : **11.01.88 ES 8800046**

(43) Date de publication de la demande :
**19.07.89 Bulletin 89/29**

(45) Mention de la délivrance du brevet :
**09.12.92 Bulletin 92/50**

(84) Etats contractants désignés :
**AT BE CH DE FR GB GR IT LI LU NL SE**

(56) Documents cités :
**EP-A- 0 067 901
DE-C- 316 490
FR-A- 2 277 137
FR-A- 2 452 329
US-A- 1 465 131
US-A- 1 595 934**

(73) Titulaire : **INTERNACIONAL SYSTEMS
RESIDUOS SOLIDOS URBANOS S.A. Société
organisée selon les lois espagnoles dite :
Orense, no. 68 - Planta 4a
E-28020 Madrid (ES)**

(72) Inventeur : **Elorza Gomez, Francisco Javier
Avenida Madariaga, 32 - 2o
E-48014 Bilbao (ES)**

(74) Mandataire : **Hasenrader, Hubert et al
Cabinet BEAU DE LOMENIE 55, rue
d'Amsterdam
F-75008 Paris (FR)**

EP 0 324 668 B1

Jouve, 18, rue Saint-Denis, 75001 PARIS

## Description

La présente invention est relative à un dispositif pour la transformation de résidus. Le document FR-A-2 277 137 décrit un tel dispositif.

Le problème mondial des résidus s'accentue chaque jour toujours plus, en raison des immenses quantités produites, tant dans le domaine industriel que dans le domaine rural et dans le domaine urbain, leur destruction donnant lieu à un problème trés important.

Jusqu'à une date assez récente, la forme la plus habituelle d'élimination des résidus à consisté à les décharger sur des emplacements prévus à cet effet. Par la suite, ce système de simple décharge, toujours en vigueur en grande partie a été amélioré ou a été abandonné pour passer à d'autres systèmes, et par conséquent, actuellement les différents systèmes d'élimination des résidus peuvent être classés dans les modalités suivantes, à savoir : les décharges contrôlées, les systèmes de traitement mixte, les systèmes de traitement mixte et "compost", les systèmes de traitement par incinération sans récupération ou avec récupération d'énergie, et enfin les systèmes de traitement par pyrolyse.

Dans les systèmes à décharge contrôlée, traitement mixte, traitement mixte et "compost", les inconvénients sont nombreux et résident essentiellement en des inconvénients d'environnement et d'exploitation.

Pour pallier ces inconvénients, les systèmes de traitement par incinération avec ou sans récupération permettent un traitement plus industriel des résidus.

Cependant, lors de l'incinération des résidus sans récupération, il est généralement constaté des contaminations atmosphériques importantes et le coût d'exploitation et d'entretien est élevé du fait de la non récupération.

Dans les systèmes de traitement par incinération avec récupération d'énergie, on incinère les résidus dans un four et on récupère l'énergie produite par la combustion des résidus.

La chaleur récupérée est utilisable par exemple, pour obtenir de la vapeur, de l'eau chaude pour le chauffage, pour produire de l'énergie électrique, etc...

En pratique, cette utilisation est très coûteuse car l'énergie obtenue doit être canalisée jusqu'à son point d'utilisation.

Cela étant, dans le but de pallier les différents inconvénients précités, un dernier type de traitement s'est développé, il s'agit du traitement par pyrolyse, appelé aussi pyrodécomposition, qui consiste à séparer d'une substance d'autres substances plus simples, au moins d'un apport de chaleur.

En principe, ce genre de traitement est celui qui peut présenter les plus grands avantages, du fait qu'il agit sur toutes les matières susceptibles d'être dégradées thermiquement, bien que jusqu'à présent on n'ait pas obtenu de résultats satisfaisants.

L'étude de ces résultats négatifs effectuée par l'inventeur du présent brevet, l'a conduit à conclure que ces résultats sont dus à un choix erroné des conditions de travail, et fondamentalement de la température choisie pour le traitement.

A cet effet, on a choisi une température comprise entre 1000 et 1500°C, ce qui donne lieu à de grandes difficultés techniques tant pour le choix des équipements que pour leur fonctionnement, et ce qui a conduit également à des couts trés élevés.

L'objet de la présente invention est de proposer un dispositif de traitement de résidus, tel que caractérisé dans les revendications, qui, dans le cadre des traitements par "pyrolyse", permette de pallier les inconvénients précités et apporte une solution au problème des traitements connus dans ce domaine, de façon à obtenir une transformation des résidus dans des conditions réellement optimales comme on pourra le voir plus loin.

Le dispositif qui constitue l'objet de la présente invention présente les objectifs de base suivants :

.- L'utilisation de réacteurs thermique qui, en raison de leur principe de construction et de la conception de l'ensemble de l'installation, permettent de faire fonctionner le système à une température réduite, par rapport à tous les procédés de "pyrolyse" connus jusqu'à présent.

.- La température de travail maximale, en tenant compte des fluctuations normales en fonction des caractéristiques des résidus à traiter, est compriseentre 400 et 600°C.

.- La conception d'un dispositif dont le principe essentiel est identique peur la transformation de résidus, tant industriels qu'urbains ou ruraux, dans lequel seules varient les conditions de travail en ce qui concerne la température, les catalyseurs et autres substances qui donnent lieu à la formation de différentes réactions chimiques en fonction des types de résidus à traiter.

.- La réalisation d'un dispositif modulaire, de façon que chaque réacteur thermique, avec son équipement correspondant puisse travailler individuellement, ce qui permet d'utiliser dans un système qui présente la même conception, depuis un seul réacteur jusqu'à une ou plusieurs batteries de réacteurs.

En accord avec ces conditions, le dispositif qui constitue l'objet de la présente invention présente les avantages suivants:

.- Le dispositif est applicable à toutes quantités de résidus, car le caractère modulaire du dispositif permet de travailler en utilisant depuis un seul réacteur, jusqu'à une ou plusieurs batteries de réacteur, et par conséquent ce dispositif peut être installé pour transformer les résidus provenant d'une usine, d'un village ou même d'une ville plus importante.

.- Il ne produit aucune contamination par de l'eau ou par des gaz de combustion, car l'eau est traitée de façon adéquate avant d'être déchargée, et les gaz sont lavés chimiquement avant la combustion.

.- La sélection préalable est facultative, mais elle n'est pas indispensable, car il estpossible d'introduire l'ensemble des résidus dans le réacteur, et par conséquent, dans les installations de capacité réduite, cette sélection n'est pas nécessaire.

.- Ce dispositif permet de transformer les résidus en produits de grande consommation et de commercialisation facile, et par conséquent ce système est rentable à partir d'une certaine quantité, ce qui fait que son coût est facilement amortissable.

.- Les coûts d'installation et de fonctionnement sont réduit par rapport aux autres systèmes existants.

.- Dans ce dispositif les résidus, à partir du moment de leur reception, sont traités dans un bâtiment fermé, et par conséquent l'installation peut être située dans n'importe quel environnement industriel proche du noyau de population producteur de résidus, ce qui se traduit par une grande économie de transport de ces résidus.

.- Le fait que chaque réacteur avec son équipement constitue un module fonctionnel qui peut être indépendant, permet que les pannes ou les travaux d'entretien ne paralysent que le réacteur ou les réacteurs nécessaires, l'installation continuant à fonctionner.

Toutes ces améliorations, ainsi que d'autres qui apparaîtront de façon plus détaillée dans cette description, dotent le présent dispositif d'un caractère différent de tout ce qui est connu jusqu'à présent.

Pour faciliter la compréhension de la nature de la présente invention, dans les dessins ci-joints il est représenté, à titre d'exemple purement illustratif et non limitatif, une forme avantageuse de réalisation industrielle, et dans les dessins en question:

La figure 1 représente schématiquement, une installation qui correspond à un exemple possible non limitatif de réalisation de l'invention.

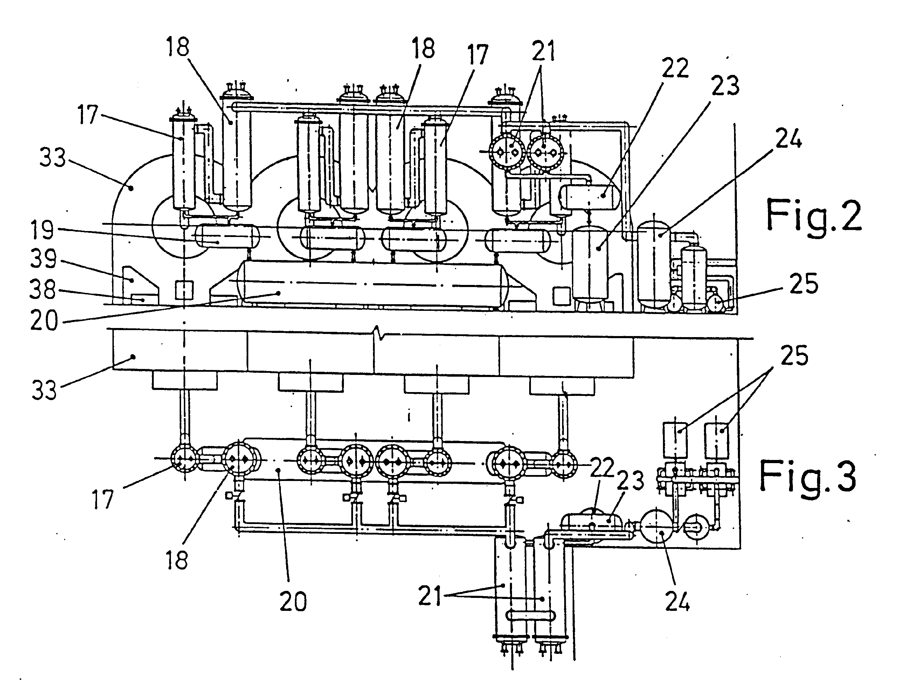

La figure 2 représente une vue en élévation d'une installation selon le schéma de la figure 1.

La figure 3 correspond à une vue en plan de la partie supérieure de la figure précédente, parciellement en coupe.

La figure 4 représente en perspective et de façon schématique quatre chambres extérieures 33 d'un même nombre de réacteurs 8.

La figure 5 correspond à la coupe V-V indiquée dans la figure 6 dans le cas où cette dernière serait une vue non sectionnée.

La figure 6 représente une coupe longitudinale du corps cylindrique 34 de chaque réacteur 8.

La figure 7 représente une vue en profil de la figure 8.

La figure 8 est une vue en élévation du corps 34.

La figure 9 est une vue de face partiellement en coupe des quatre chambres extérieures 33 que l'on voit dans la figure 4.

Les figures 10 et 11 représentent l'une des roues 37 avec son armature de support ainsi que des vues en profil et en élévation respectivement dont la première est représentée partiellement en coupe.

La figure 12 est une vue en élévation de la figure 13.

La figure 13 représente en plan, l'une des portes 40 de la bouche de chargement et de déchargement 45 des corps cylindriques métalliques 34.

La figure 14 représente la coupe XIV-XIV indiquée dans la figure 15.

La figure 15 est une vue en élévation d'un filtre 47 dont la partie extérieure est représentée en lignede tracé mixte.

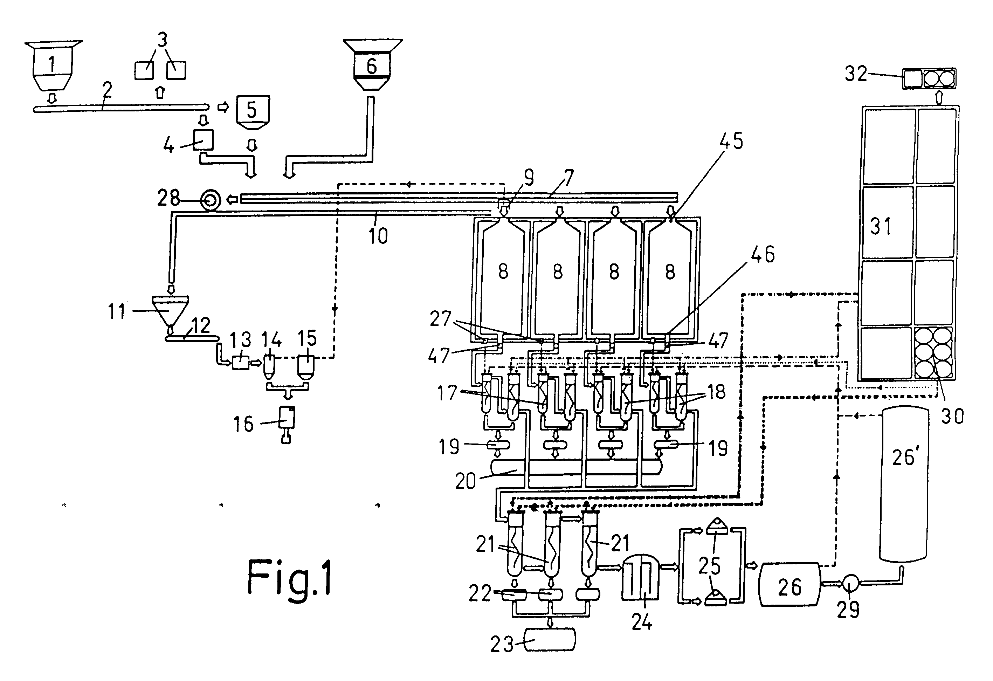

Le système qui constitue l'objet de la présente invention a pour but la transformation de résidus, tant industriels que ruraux et urbains, et l'on a représenté dans la figure 1 de façon schématique un exemple possible d'une installation pratique de ce système de transformation, dont la description générale en ce qui concerne les moyens qui le constituent est la suivante:

Dans un bâtiment général fermé, dans lequel est installée la réception des résidus est située une trémie de réception 1 qui est alimentée par une pince à griffes ou par d'autres moyens analogues. Dans la partie inférieure de la trémie 1 il existe un dispositif de rupture formé par des files de cylindres tournants qui comportent sur leur périphérie une série de pointes coniques disposées de telle façon qu'elles rompent les sacs contenant les ordures et laissent passer librement les bouteilles de verre.

En face de la trémie est disposé une bande transporteuse 2 qui traverse une zone 3, destinée à la selection du verre, et éventuellement de la matière plastique, zone dans laquelle peuvent être séparés des résidus, des objets de verre et éventuellement de matière plastique.

A la fin de la bande 2 est disposée une unité 4 de capture magnétique formée par un cylindre magnétique qui sépare des résidus la fraction ferro-magnétique. Cette fraction ferro-magnétique tombe par la suite sur une nouvelle bande transporteuse 7 et elle se mélange de nouveau avec les résidus qui ont été triturés préalablement dans un broyeur 5, dans le but de réduire leur volume et de pouvoir mettre à profit de cette façon la capacité maxima des réacteurs thermiques 8.

En face de la bande transporteuse 7 est disposée une autre unité de broyage 6, pour les pneumatiques, la biomasse ou pour d'autres types de résidus adaptables au processus et qui sont différents des résidus urbains connus sous le nom d'ordures.

Dans le cas où l'installation est équipée d'un seul réacteur 8, la bande 7 se prolonge jusqu'à la bouche de chargement de ce dernier; cependant, lorsqu'il existe plusieurs réacteurs 8 on a prévu que la bande 7 soit constitué par une partie fixe et une partie finale mobile, au moyen de laquelle on chargera les résidus dans la bouche du réacteur 8 correspondant.

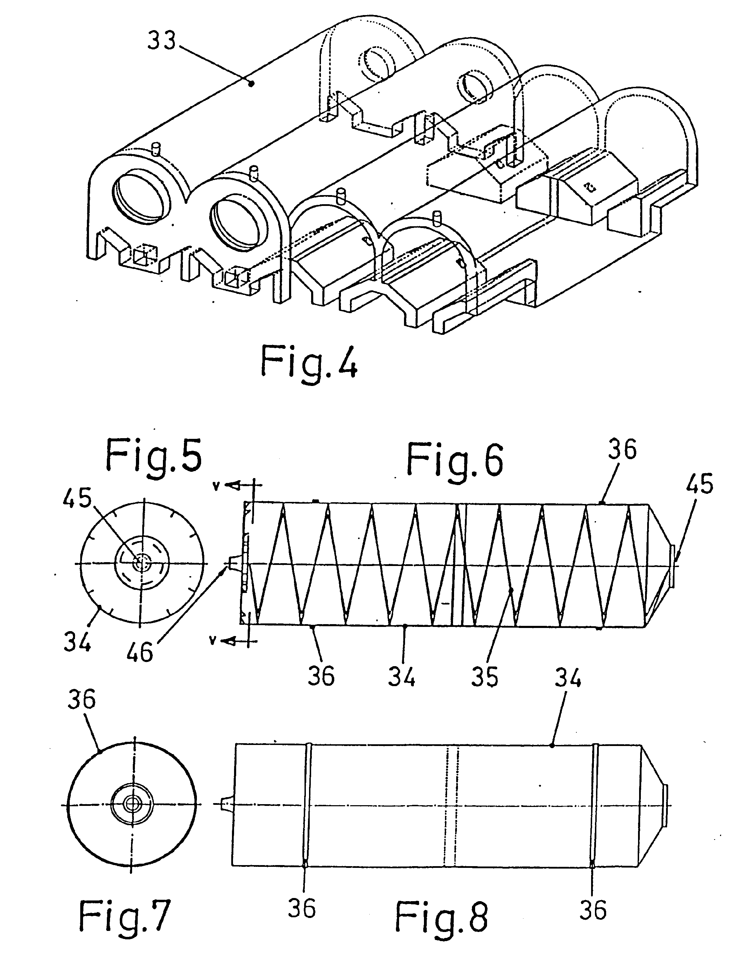

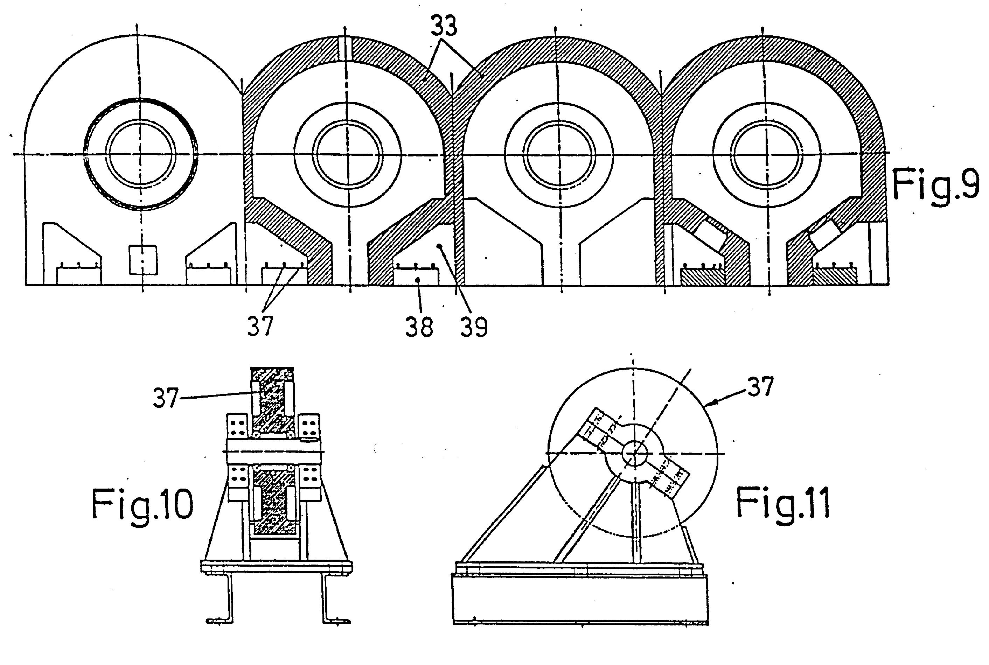

Chaque réacteur 8 est constitué par une chambre extérieure enveloppante 33, voir figures 4 et 9, et par un corps de réacteur cylindrique intérieur 34, représenté dans les figures 5 à 8.

La chambre extérieure 33 est constituée par des briques réfractaires, et dans l'espace compris entre la chambre extérieure 33 et le corps cylindrique intérieur correspondant, sont situés des moyens de chauffage tels que notamment des brûleurs mixtes 27 à gaz et à fuel lourd, qui servent à élever la température de la chambre à air qui entoure le corps cylindrique 34, de façon que ce dernier reçoive la chaleur de façon homogène et indirecte et qui autorisent notamment une température de travail à l'intérieur du corps 34 atteignant une valeur comprise entre 400 et 600°C.

Il a été prévu que chaque corps cylindrique 34, selon une réalisation pratique non limitative soit constitué par un cylindre d'acier inoxydable d'environ huit mètres de long par deux mètres et demi de diamètre, qui peut ainsi recevoir un chargement de l'ordre de sept tonnes de résidus à transformer.

A l'intérieur de chaque corps cylindrique 34 sont disposés hélicoïdalement des ailettes de déflection 35, voir figure 6, dont la mission consiste à déplacer et distribuer la charge de façon homogène dans tout l'intérieur du corps 34 de chaque réacteur 8.

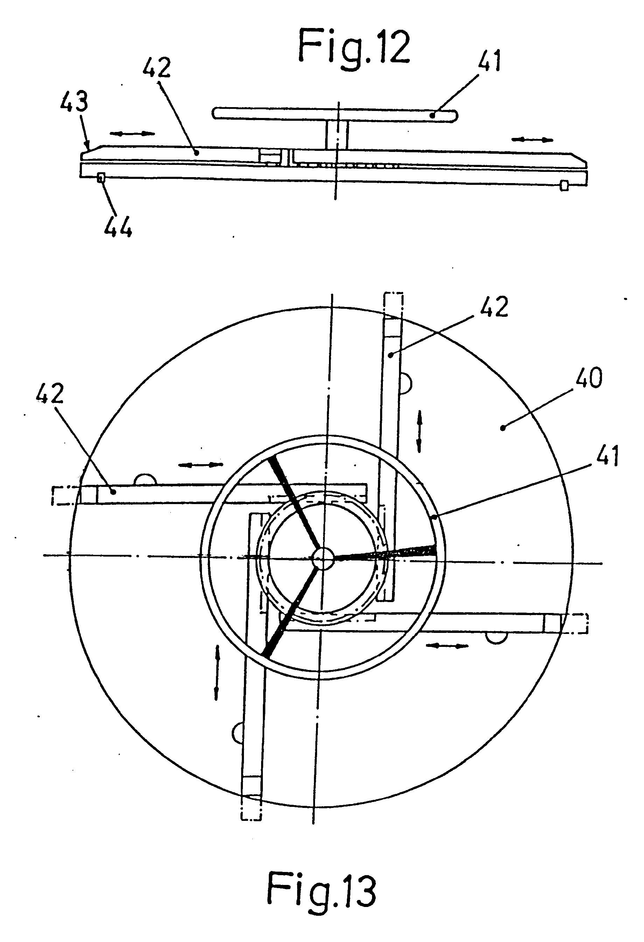

Chaque corps cylindrique 34 est susceptible de réaliser sur lui même un mouvement de rotation radial, mouvement obtenu par des roues 37 représentées dans les figures 10 et 11, qui s'appuient sur des pistes de roulement 36.

Ces roues 37 sont montées dans des bâtis installés sur des supports 38, qui sont disposés dans des enceintes 39 situées en dehors de la chambre de chauffage définie entre chaque corps cylindrique 34 et son recouvrement de matériau réfractaire 33 comme on peut le voir dans la figure 9. La disposition des roues 37 dans ces enceintes 39 permet que les roues 37 ne soient pas soumises à des températues élevées pendant le travail.

La rotation des corps cylindriques 34 peut s'effectuer à deux régimes de vitesse différents, l'un rapide de chargement et de déchargement et l'autre lent de travail. La transmission est effectué par un moteur réducteur et une chaine, et elle est dotée d'un tendeur intermédiaire pour compenser les dilatations.

Le chargement et le déchargement s'effectuent à travers une bouche 45 située à la partie avant du réacteur. Cette bouche 45 présente une porte 40, voir figures 12 et 13 qui peut être fermée par un dispositif de volant tournant 41, avec lequel engrènent des crémaillères 42 qui peuvent occuper ainsi deux positions, l'une d'introduction qui permet l'ouverture de la porte 40 et l'autre de sortie qui empêche cette ouverture. Les crémaillères 42 présentent des extrémités en forme de coin 43 qui tendent à exercer une poussée sur la porte 40 dans le sens de sa fermeture. Egalement, la porte 40 présente un joint de graphite 44 pour assurer une fermeture hermétique.

Sur la partie postérieure de chaque corps 34 il existe une bouche 46 pour l'accouplement du tuyau d'extraction des gaz, dotée d'un raccord tournant dont l'étanchéité est assurée par un presse-étoupe.

A l'intérieur et sur la partie postérieure ou de sortie des gaz sont situés des moyens de filtrage pour les éléments solides de grande dimension qui sont destinés à empêcher leur sortie par le tuyau d'évacuation des gaz. Ces moyens de filtrage sont nettoyés automatiquement par la friction des résidus.

Dans le tube d'extraction des gaz, à la sortie du réacteur, est situé un dispositif de filtrage 47 des particules éventuellement en suspension dans le gaz, qui sont retenues par leur choc contre une série de lames de déflection.

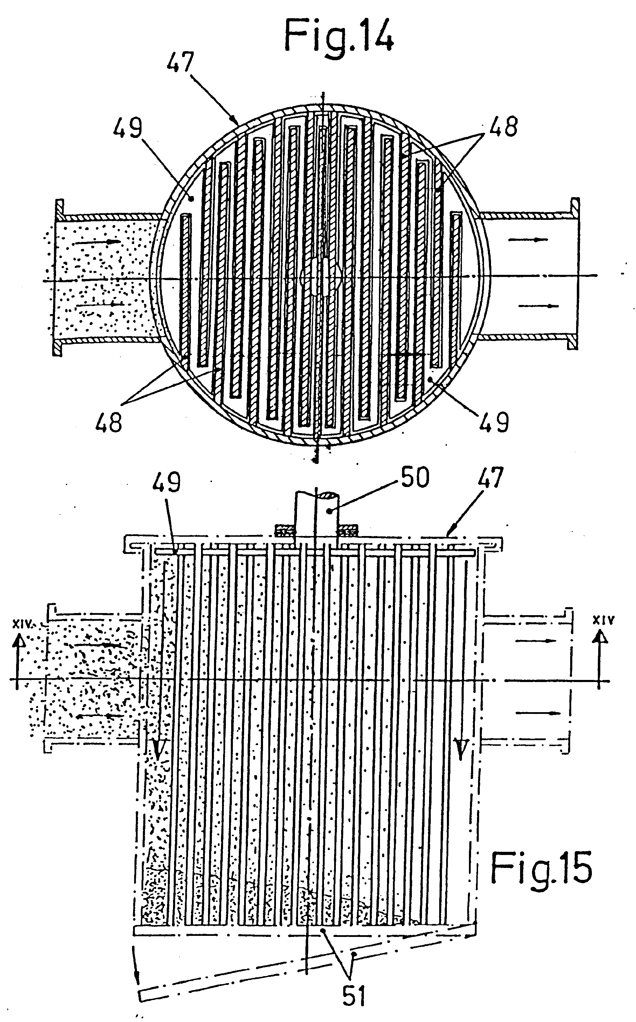

Dans les figures 14 et 15 on a représenté un exemple de réalisation pratique possible des filtres en question 47, dans lequel chacun d'eux présente une pluralité de lames de déflection 48, qui sont disposées en quinconce.

Ces lames de déflection 48 passent à travers des rainures, formées à cet effet dans une plaque 49 montée sur un piston pneumatique temporisé 50, lequel effectue à intervalles de temps prédéterminés un mouvement de va et vient le long des lames 48 pour les nettoyer.

A la base de chaque filtre 47 il existe un couvercle basculant 51, dont l'ouverture sélective permet de vider rapidement la poussière déposée à l'intérieur de chaque filtre 47.

D'autre part, le corps 34 de chaque réacteur 8 est pourvu d'un dispositif réfrigérant, qui, prenant l'eau condensée dans le système, l'injecte à l'intérieur des corps 34 pendant la phase finale de refroidissement du produit, et cette eau qui s'évapore instantanément crée une réfrigération qui continue jusqu'à atteindre la température établie, de l'ordre de 100 degrès Centigrades ce qui évite la possibilité d'incendie ou d'explosion durant la décharge.

Le gaz qui est extrait pendant le fonctionnement de chaque réacteur 8 et qui arrive à atteindre, à la sortie du réacteur, une température de 600°C, traverse après avoir été filtré, un échangeur de chaleur 17 qui le refroidit partiellement, cette chaleur étant absorbée par le gaz d'alimentation du brûleur 27, et le gaz se trouvant ainsi dans des conditions excellentes pour être brûlé.

Le gaz extrait poursuit son parcours jusqu'à des moyens condenseurs de goudron 18, dans lesquels le gaz est refroidi au-dessous de 140°C par une circulation d'eau à contre-courant qui est contrôlée automatiquement par une électrovanne pourvue d'un thermostat.

Chaque condenseur de goudron 18 est doté d'un réservoir individuel 19, et tous ces réservoirs individuels sont reliés à un réservoir nourrice commun 20.

Lorsque l'on vide le réservoir 20, on ferme les vannes entre ce dernier et les réservoirs individuels 19 et l'on met en marche une pompe d'évacuation du goudron vers un réservoir extérieur de magasinage, cette opération pouvant être effectuée sans affecter d'aucune façon le vide dans la conduite.

Le gaz provenant des condenseurs 18 arrive à des condenseurs d'eau 21 à une température de l'ordre de 140°C et il est refroidi par une circulation d'eau à contre-courant au-dessous de 40°C; de cette façon on condense toute la fraction aqueuse qui est recueillie dans les réservoirs individuels 22.

Les réservoirs indivuels 22 communiquent avec un réservoir commun 23, et comme dans le cas précédent, ils peuvent être séparés indivuellement de ce réservoir commun 23, à partir duquel, au moyen d'une motopompe, on fait passer l'eau à travers des dispositifs de filtrage et de traitement pour son utilisation ultérieure ou sa décharge.

Dans la figure 1 on peut voir le système 30 de dépuration primaire de l'eau, formé par six colonnes remplies de charbon végétal et qui agissent en deux étapes, c'est à dire une étape de dégrossissage et de filtrage des écumes et une étape de finition, après quoi l'eau pénètre dans des piscines ou dans des réservoirs d'eau de refroidissement 31 disposés en série pour refroidir l'eau.

L'excédent d'eau est envoyé à un groupe de traitement final 32 formé par deux colonnes en paralléle remplies de charbon actif, dans lesquelles sont absorbés les résidus possibles de solvants organiques, après quoi l'eau arrive à un caisson annexe de traitement dans lequel est effectuée une désinfection et une oxydation au moyen d'un barbotage de chlore gazeux et d'air, et l'eau traverse ensuite de nouveau les colonnes de charbon actif afin de retenir le chlore résiduel, les chloromines et les autres composants chimiques qui auraient pu se former. L'effluent est traité dans le caisson annexe au moyen d'opérations automatiques de neutralisation, contrôle du pH et température, après quoi il est évacué.

La fraction de gaz non condensée dans les condenseurs 21 est conduite à un laveur de gaz 24 dans lequel elle est lavé par barbotage en deux phases: en premier lieu avec un fluide fortement basique et ensuite avec un fluide fortement acide. De cette façon on retient les composants non condensables de caractère acide ou basique. Le lavage de gaz est complété par l'effet de cyclone réalisé sur l'eau par l'anneau liquide de pompe à vide 25.

A cet égard, chaque réacteur 8 et plus précisément chaque corps 34 de réacteur est relié à des moyens qui permettent que le processus de transformateur thermique des résidus se déroule sous vide et est assujetti à un ensemble de pompes à vide 25. Ainsi, l'efficacité du traitement est accrue grâce au vide et il est possible d'effectuer le traitement à plus basse température sans influence sur le rendement.

Ces pompes à vide 25 sont deux pompes du type d'anneau liquide, disposées symétriquement et qui fonctionnent de façon échelonnée, pour adapter à tout moment la capacité d'aspiration au débit de gaz produit. Ces pompes 25 créent ainsi un vide dans lequel fonctionne tout le circuit, vide qui donne lieu à l'aspiration de la phase gazeuse provenant des réacteurs 8.

Dans la figure 1 on peut voir que les numéros de référence 26 et 26'indiquent deux réservoirs de gaz, un petit réservoir 26 destiné à la recirculation du gaz qui doit être brûlé dans les brûleurs 27, et un réservoir plus grand 26' qui sert de réserve pour la phase initiale durant laquelle il n'est pas produit une quantité de gaz suffisante pour l'auto-alimentation et pour la phase finale, dans laquelle il est produit plus de gaz que l'on n'en consomme.

Le réservoir de grande dimension 26' est doté d'un dispositif de sécurité qui, en cas de surpression, provoque l'ouverture d'une vanne ainsi que l'allumage d'une torche, et en outre il existe un système de refroidissement automatique par arrosage.

Lorsque la pression du gaz dans les petits réservoirs 26 dépasse une valeur prédéterminée un compresseur 29 se met en marche automatiquement et donne lieu au transfert de ce gaz au réservoir de grandes dimensions 26′.

Une fois terminé le travail du réacteur ou des réacteurs 8 correspondants, le corps 34 tourne dans le sens contraire à celui du chargement, de façon que les ailettes 35 déplacent le produit vers la bouche 45.

A cette bouche 45 est reliée, pendant la décharge, une cloche mobile d'extraction pneumatique 9 qui aspire les particules solides de charbon en suspension. Ces particules sont transportées à un moulin 13 pour être divisées finement.

La partie de matière carbonisée non captée pneumatiquement est déposée sur une bande transporteuse 10, qui la transporte vers une trémie 11 qui reçoit le produit, pour l'alimentation ultérieure d'un crible vibrant 12, dans lequel sont séparés les éléments ferromagnétiques, les éléments inertes et les autres métaux. Le produit carbonisé qui traverse les mailles du crible 12 est transporté pneumatiquement jusqu'à la trémie du moulin 13.

Le reste continue jusqu'à la fin de la ligne de criblage où sont séparés magnétiquement les métaux ferromagnétiques pour être comprimés et commercialisés ultérieurement. Les autres éléments inertes sont recueillis dans un petit réservoir pour être déchargés ultérieurement.

De cette façon, le moulin microniseur 13 reçoit la matière carbonisée provenant de deux points différents, lesquels sont: le système de capture pneumatique 9 et le crible 12. Le moulin 13 comporte un dispositif de séparation d'une grande partie des cendres, et réduit les dimensions des particules au-dessous de 75 microns.

A sa sortie du moulin 13, le produit arrive à un cyclone 14 dans lequel est effectuée la décantation du produit moulu. Conjointement avec le cyclone 14 est installé un filtre 15 qui réalise les deux fonctions suivantes: d'une part il filtre la poussière recueillie par le capteur pneumatique 9 pendant le déchargement, et d'autre part il filtre le courant entrainé par le moulin 13.

Finalement, le produit recueilli dans le cyclone 14 et dans le filtre 15 arrive à une bascule-ensacheuse 16 dans laquelle il est mis en sac automatiquement pour qu'il puisse être manipulé, magasiné et commercialisé de façon plus parfaite et plus propre.

Après avoir décrit les moyens fondamentaux utilisés dans l'installation en accord avec le système qui constitue l'objet de l'invention, on décrira dans ce qui suit le fonctionnement de ces moyens pour la transformation des trois types de résidus mentionnés, c'est à dire résidus industriels, urbains et ruraux.

TRANSFORMATION DES RESIDUS INDUSTRIELS

Les résidus industriels les plus communs sont les plastiques, les caoutchouc, les pneumatiques, les restes de bois et de tapisserie, etc... Après avoir trituré tous ces résidus dans la machine 6 on les introduit dans le réacteur ou les réacteurs 8 correspondants, en mettant en marche leurs brûleurs respectifs 27, et ensuite on effectue la connexion de la canalisation du vide obtenu par les motopompes 25.

De cette façon la masse commence à se réchauffer progressivement, ce qui donne lieu à la réalisation des differentes réactions. En raison des conditions de vide, lorsque on atteint à l'intérieur du réacteur 8 une température de 50-60°C, la vapeur d'eau commence à se dégager et elle se condense dans les condenseurs 21.

Les différentes réactions se produisent au fur et à mesure que la température augmente, ce qui donne lieu à la formation de gaz de différentes caractéristiques, les gaz de goudron se condensant dans les condenseurs 18. Le goudron ainsi obtenu est un mélange complexe de composés aromatiques, qui au cours d'opérations ultérieures, peut être distillé pour obtenir différents solvants.

Les gaz non condensables sont lavés en 24 et sont emmagasinés dans les réservoirs 26 et 26′ pour alimenter avec eux les brûleurs 27.

Lorsque les réacteurs 8 atteignent une température de 400-600°C selon la matière qu'il contiennent, l'opération est terminée du point de vue thermique.

A ce moment, on injecte de l'eau à l'intérieur des réacteurs 8 pour refroidir le produit à la température désirée, et lorsque cette dernière a été atteinte on ouvre la bouche 45 pour commencer le déchargement.

Le produit est conduit, au moyen du capteur pneumatique 9 et de la bande 10 jusqu'à la zone du moulin 13 et il arrive finalement à la bascule-ensacheuse 16.

EXEMPLE

Après avoir traité une tonne de résidus industriels de la fabrication de pneumatiques, qui sont composés de caoutchouc, carbone, fil d'acier, et dans certains cas fibres textiles,on a obtenu les matières suivantes:

```
Noir de fumée de 10 à 70 microns ........200 Kg.
Charbon en poudre pour injecter
ou pour faire des briquettes        ........300 Kg
Goudron                             ........100 Kg


   Fil d'acier                      ........ 50 Kg
   Cendres                          ........ 30 Kg
```

## TRANSFORMATION DE RESIDUS URBAINS

Le traitement des résidus urbains s'effectue de la même façon que le précédent sauf que les sacs d'ordures sont vidés dans la trémie 1 dotée de son dispositif de rupture des sacs. Si on le désire, on peut effectuer un triage du verre et des matières plastiques et le reste suit son chemin, les produits ferromagnétiques étant séparés par le capteur magnétique 4, tandis que le reste est trituré en 5.

Les produits ferromagnétiques, comme les boites de conserves, sont ajoutés ensuite aux résidus triturés et le tout est introduit dans les réacteurs 8, étant donné qu'il a été démontré que l'étain dont sont pourvues les boites de conserve aide à absorber le chlore qui se produit au cours des réactions à l'intérieur des réacteurs 8.

Il a été prévu également d'introduire dans la masse un additif d'absorbtion des produits chlorés.

Le reste du processus est essentiellement identique à celui qui a été décrit plus haut.

## EXEMPLE

Pour déterminer les pourcentages des ordures ménagères, on a étudié les ordures provenant de différentes villes, et même de différents quartiers qui ont des niveaux de vie différents, et on a utilisé une moyenne des résultats obtenus.

```
Matière organique .................. 45-55%
Papier et carton  ................. 14-18%
Plastiques        ................. 5 -9%
Textiles, cuirs et caoutchouc..... 4 -5%
Verre             ................. 3 -8%
Ferraille ferromagnétique ........ 3 -4%
Eléments inertes divers   ........ 14-19%
```

Les caractéristiques physico-chimiques de ces produits sont les suivantes:

```
Densité            ................. 200 Kg/m3
Humidité           ................. 40%
Matière combustible .............. 41%
Cendres et verre   .............. 19%
P.C.I.             ...............1700Kcal/Kg
```

Produits obtenus au cours du traitement de ces résidus en moyenne et par tonne traitée:

```
Noir de fumée de 10 à 75 microns .. 50 Kg
Charbon en poudre pour injecter
ou faire des briquettes .......... 120 Kg
Goudron              ............... 40 Kg
Ferraille ferromagnétique ........ 30 Kg
Verre              ............... 40 Kg
```

Gaz, seulement celui qui est nécessaire pour l'apport de chaleur au traitement.

## TRANSFORMATION DE RESIDUS AGRICOLES ET FORESTIERS

On traite les résidus agricoles et forestiers en les introduisant dans une espèce de machine à sectionner équipée de couteaux pour réduire leurs dimensions, après quoi ils sont conduits directement par les rubans 7 au réacteur 8, dans lequel se produit la réaction thermique. Lorsque cette dernière est terminée, tout le produit est constitué par de la matière carbonisée, car cette matière contient seulement du carbone fixé, des éléments volatiles et entre 0,5 et 0,7% de soufre, avec un pourcentage réduit de 6-8% de cendres, lesquelles sont séparées presque totalement dans le moulin 13.

## EXEMPLE

Ces produits sont très variables en fonction de leur lieu d'origine et de leur état d'humidité. L'humidité contenue dans ces matières peut varier de 25 à 70% et par conséquent leur rendement de produit à obtenir est très variable; par contre ils ne contiennent pas d'éléments inertes et peu de cendres.

La moyenne que l'on peut obtenir est la suivante :

```
Noir de fumée de 10 à 75 microns ...... 60 Kg
Charbon pour injecter ou faire
des briquettes              ...... 120 Kg
Goudron              .      ...... 50 Kg
Cendres              ...... 30 Kg
```

## ANALYSE DES PRODUITS OBTENUS AU COURS DE LA TRANSFORMATION DES RESIDUS

Les produits obtenus sont applicables à différentes industries et, par conséquent, le noir de fumée peut être utilisé par les industries du caoutchouc et de la matière plastique. Le charbon à injecter remporte un grand succès comme combustible dans les industries du ciment, de la céramique et autres et il peut être également utilisé pour le transformer en briquettes utilisées dans les chaudières de chauffage. Le goudron peut être utilisé de différentes façons: en raison de sa composition on pourrait l'employer comme combustible liquide (fuel de densité moyenne) on peut le distiller pour extraire les solvants qu'il contient pour les utiliser dans l'industrie, tandis que le reste peut être utilisé comme imperméabilisant ou sous forme de goudron en aggloméré pour recouvrir le sol.

Les caractéristiques des produits obtenus en accord avec ce système sont indiquées dans ce qui suit sans caractère limitatif.

.- NOIR DE FUMEE DE 10 A 75 MICRONS

    Carbone    ......................... 92%

    Hydrogène  ....................... 2,5%

    Soufre    ......................... 0,5%

    Cendres    ........................ 5%


    P.C.I.    ...................... 8.200Kcal/Kg

.- CHARBON A INJECTER OU POUR FORMER DES BRIQUETTES

    Carbone fixé ..................... 45%

    Eléments volatiles ............... 36%

    Hydrogène  ...................... 2,5%

    Soufre    ...................... 0,5%

    Humidité  ....................... 2%

    Cendres    ...................... 14%

    P.C.I.    ..................... 5.600 Kcal/Kg

    Poids spécifique ................ 380.400 Kg/m3

.- GOUDRON

    Naphtalène et anthracène .......... 5,5 - 6%

    Oléfine    ...................... 3 - 4%

    Aromatiques ...................... 19- 22%

    Parafine    ..................... 1,2 - 1%

    Eau de composition ............... 6 - 7%

    Restes non distillables (Brai) .... 70%

    P.C.I.    ..................... 8.900 Kcal/Kg

    Poid spécifiques à 20°C ....... 950-1.000 Kg/m3

Après avoir décrit ainsi suffisamment la nature de l'invention ainsi que sa réalisation industrielle, il ne reste qu'à ajouter que dans son ensemble et ses parties constitutives il est possible d'introduire des changements de forme, de matière et de composition sans sortir du cadre de l'invention, à condition que ces modifications n'altèrent pas son principe.

**Revendications**

1. Dispositif pour la transformation de résidus, comprenant au moins une zone de réception (1), une zone de sélection (3, 4), une zone de broyage (5, 6) des résidus ainsi qu'une zone de traitement thermique (8) de ces résidus constituée de plusieurs réacteurs (8) dont chacun comporte des moyens de chauffage (27) et un corps de réacteur (34) qui est susceptible de réaliser sur lui-même un mouvement de rotation et présente une bouche obturable (45) servant au chargement des résidus à transformer et au déchargement des résidus transformés ainsi qu'une bouche d'extraction (46) des gaz de pyrolyse, caractérisé en ce que
    - chaque réacteur (8) comporte en outre une chambre extérieure enveloppante (33) ainsi que ses propres moyens de filtrage (47), de condensation (18), et de broyage, afin de former un bloc modulaire indépendant, et que

- chaque corps (34) de réacteur est relié à des moyens (25) permettant que le processus de transformation thermique des résidus se déroule sous vide.

2. Dispositif pour la transformation de résidus selon la revendication 1, caractérisé en ce qu'au moins l'un des réacteurs thermiques (8) comprend un corps de réacteur intérieur (34) de nature métallique et de forme cylindrique muni d'ailettes intérieures (35) disposées hélicoïdalement, et relié à des moyens de transmission (37) capables de le faire tourner à deux vitesses différentes, une chambre à air extérieure en matériau réfractaire (33) et enveloppant ledit corps cylindrique (34) ; des brûleurs (27) qui chauffent la chambre à air (33) et ledit corps cylindrique tournant (34), et un groupe de pompes (25) qui assure des conditions de vide dans ledit corps de réacteur (34) et l'extraction des gaz de pyrolyse à travers les moyens de filtrage (47) et de condensation (18) vers un réservoir de gaz (26,26′) et/ou les brûleurs (27).

3. Dispositif pour la transformation de résidus, selon l'une des revendications 1 et 2, caractérisé en ce que la bouche de chargement et de déchargement (45) de chaque corps de réacteur (34) est associée à des moyens de transport correspondants (7 et 10) des résidus à transformer ou transformés et la bouche d'extraction de gaz (46) est reliée à un échangeur de chaleur (17) dans lequel est refroidi le gaz provenant du réacteur (8) en même temps qu'est chauffé le gaz utilisé pour l'alimentation du brûleur (27) ; et que les moyens de condensation comprennent un condenseur de goudron (18) raccordé à un réservoir individuel (19) qui communique à travers une vanne avec un réservoir nourrice (20) commun à tous les réservoirs individuels (19) ; et un condenseur d'eau (21) raccordé à un réservoir individuel (22) qui est susceptible de communiquer avec un réservoir nourrice (23) commun à tous les réservoirs individuels (22).

4. Dispositif pour la transformation de résidus selon la revendication 3, caractérisé en ce que les moyens de transport (7) destinés au chargement du réacteur (8) sont reliés soit à un broyeur (6), soit à une trémie (1) dotée de deux files de galets tournants pourvus de pointes coniques pour déchirer les sacs à ordures ; cette trémie (1) étant associée à une zone (3) de triage du verre et/ou des matières plastiques, à une unité de capture magnétique (4) et à un broyeur d'ordures (5), dont les sorties débouchent sur une même bande transporteuse (7).

5. Dispositif pour la transformation de résidus selon la revendication 3, caractérisé en ce que les moyens de transport (10) destinés au déchargement de réacteurs (8) alimentent une trémie de réception (11) dont la sortie débouche sur un crible vibrant de triage (12), destiné à séparer les éléments ferromagnétiques et les autres métaux de la matière carbonisée susceptible d'être acheminée vers un moulin microniseur (13), dont la sortie est reliée à un cyclone (14) associé à une bascule ensacheuse (16).

6. Dispositif pour la transformation de résidus selon la revendication 3, caractérisé en ce qu'à la sortie de la bouche d'extraction de gaz (46) de chaque réacteur (8) est disposé un filtre (47) comprenant une série de lames de déflexion (48) disposées en quinconce, ces lames (48) passant à travers des rainures formées à cet effet dans une plaque (49) soumise à l'action d'un piston pneumatique temporisé (50), susceptible d'imprimer à la plaque (49) un mouvement de va-et-vient le long des lames (48).

7. Dispositif pour la transformation de résidus selon la revendication 3, caractérisé en ce que les condenseurs d'eau (21) présentent une sortie pour la partie du gaz non condensable, qui débouche vers un laveur de gaz (24) communiquant à son tour, par l'intermédiaire des pompes à vide (25) disposées symétriquement, avec un réservoir de recirculation du gaz (26) relié par l'intermédiaire d'un compresseur (29) à un réservoir (26′) de réserve.

8. Dispositif pour la transformation de résidus selon la revendication 2, caractérisé en ce qu'à l'intérieur du corps cylindrique tournant (34) de chaque réacteur (8) sont prévues des bouches d'injection d'eau sous pression extraite de piscines (31) de décantation en série, dans lesquelles l'eau provenant des condenseurs (21) est refroidie après son passage dans une unité de dépuration primaire (30) qui comporte des colonnes remplies de charbon végétal.

9. Dispositif pour la transformation de résidus selon la revendication 2, caractérisé en ce que la chambre extérieure réfractaire (33) de chaque réacteur (8) comporte des enceintes (39) extérieures à la zone de chauffage, dans lesquelles sont disposés des supports (38) de roues (37) destinées à être en contact avec des pistes de roulement (36) situées à l'extérieur de chaque corps cylindrique (34), pour permettre la rotation de ce dernier ; de telle façon que ces roues (37) ne soient pas soumises aux températures élevées de travail du réacteur (8).

10. Dispositif pour la transformation de résidus selon la revendication 3, caractérisé en ce que la bouche de chargement et de déchargement (45) est fermée par un couvercle (40) au moyen d'un volant tournant (41) engrenant des crémaillères de fermeture (42), dotées d'une extrémité (43) en forme de coin.

11. Dispositif pour la transformation de résidus selon la revendication 5, caractérisé en ce que la bouche (45) de chaque réacteur (8) est associée à une cloche mobile d'extraction pneumatique (9) qui aspire les particules solides de charbon en suspension et les transporte jusqu'au moulin (13) après passage dans un filtre (15).

12. Dispositif pour la transformation de résidus selon la revendication 7, caractérisé en ce que le réservoir de gaz (26) alimente des brûleurs (27) et est associé à un compresseur (29) pour transférer le gaz à partir d'une valeur prédéterminée de pression vers le réservoir (26′), lequel est doté d'un dispositif de tarage de sécurité avec l'allumage automatique d'une torche, et un système de refroidissement par arrosage.

13. Dispositif pour la transformation de résidus selon la revendication 8, caractérisé en ce qu'il comporte en outre un groupe de traitement d'eau (32) constitué de deux colonnes en parallèle remplies de charbon actif et par un caisson de traitement, destinés à être alimentés avec le surplus d'eau prétraitée.

14. Dispositif pour la transformation de résidus selon la revendication 1, caractérisé par le fait que, dans la zone initiale de réception (1) et de sélection (3, 4) des résidus, il est prévu une unité de capture magnétique (4).

## Patentansprüche

1. Einrichtung zur Umwandlung von Abfällen mit wenigstens einer Aufnahmezone (1), einer Auswahlzone (3, 4), einer Zerkleinerungszone (5, 6) für die Abfälle sowie einer Zone (8) zur Wärmebehandlung dieser Abfälle, die aus mehreren Reaktoren (8) besteht, deren jeder Heizmittel (27) und einen Reaktorkörper (34) aufweist, der geeignet ist, eine Drehbewegung um sich selbst auszuführen, und eine verschließbare Öffnung (45), die der Beladung mit den umzuwandelnden Abfällen und der Entleerung der umgewandelten Abfälle dient, sowie eine Öffnung (46) zum Abziehen der Pyrolysegase aufweist,
dadurch **gekennzeichnet,**
daß jeder Reaktor (8) außerdem eine äußere Ummantelungskammer (33) sowie seine eigenen Mittel zum Filtrieren (47), zum Kondensieren (18) und zum Zerkleinern aufweist, um einen unabhängigen modularen Block zu bilden, und
daß jeder Reaktorkörper (34) an Mittel (25) zur Ermöglichung, daß das Verfahren zur thermischen Umwandlung der Abfälle unter Vakuum abläuft, angeschlossen ist.

2. Einrichtung zur Umwandlung von Abfällen nach dem Anspruch 1,
dadurch gekennzeichnet,
daß wenigstens einer der Wärmereaktoren (8) einen inneren Reaktorkörper (34) metallischer Art und zylindrischer Form, der mit wendelförmig angeordneten inneren Flügeln (35) ausgerüstet und an Übertragungsmittel (37) angeschlossen ist, die geeignet sind, ihn mit zwei verschiedenen Geschwindigkeiten rotieren zu lassen;
eine äußere Luftkammer (33) aus feuerfestem Material, die den zylindrischen Körper (34) umgibt; Brenner (27), die die Luftkammer (33) und den zylindrischen Drehkörper (34) erhitzen; und eine Gruppe von Pumpen (25) aufweist, die Vakuumbedingungen im Reaktorkörper (34) und das Abziehen der Pyrolysegase durch die Mittel zum Filtrieren (47) und zum Kondensieren (18) hindurch zu einem Gasspeicher (26, 26′) und/oder den Brennern (27) sichert.

3. Einrichtung zur Umwandlung von Abfällen nach einem der Ansprüche 1 und 2,
dadurch gekennzeichnet,
daß die Beladungs- und Entleerungsöffnung (45) jedes Reaktorkörpers (34) mit entsprechenden Mitteln (7 und 10) zum Transport der umzuwandelnden oder umgewandelten Abfälle verbunden ist und die Gasabziehöffnung (46) mit einem Wärmeaustauscher (17) verbunden ist, in dem das vom Reaktor (8) kommende Gas zur gleichen Zeit abgekühlt wird, in der das zur Speisung des Brenners (27) verwendete Gas erhitzt wird, und
daß die Kondensiermittel einen Teerkondensator (18), der mit einem zugehörigen Speicher (19) verbunden ist, der über ein Ventil mit einem allen zugehörigen Speichern (19) gemeinsamen Betriebsspeicher (20) in Verbindung steht; und einen Wasserkondensator (21) aufweisen, der mit einem zugehörigen Speicher (22) verbunden ist, der zur Verbindung mit einem allen zugehörigen Speichern (22) gemeinsamen Betriebsspeicher (23) verbindbar ist.

4. Einrichtung zur Umwandlung von Abfällen nach Anspruch 3,
dadurch gekennzeichnet,
daß die zur Beladung des Reaktors (8) bestimmten Transportmittel (7) entweder mit einem Brechwerk (6) oder mit einem Trichter (1) verbunden sind, der mit zwei Reihen von mit konischen Spitzen zum Zerreißen der Müllsäcke versehenen Drehrollen ausgestattet ist, welcher Trichter (1) mit einer Zone (3) zum Aussortieren des Glases und/oder der Kunststoffe, einer magnetischen Erfassungseinheit (4) und einem Müllzerkleinerer (5) verbunden ist, deren Ausgänge auf einem einzigen Transportband (7) münden.

5. Einrichtung zur Umwandlung von Abfällen nach Anspruch 3,
dadurch gekennzeichnet,
daß die zur Entleerung von Reaktoren (8) bestimmten Transportmittel (10) einen Aufnahmetrichter (11) speisen, dessen Ausgang über einem Vibrationssortiersieb (12) mündet, das zum Trennen der ferromagnetischen Elemente und der anderen Metalle von carbonisiertem Material bestimmt ist, das sich zum Fördern zu einer "Microniseur"-Mühle (13) eignet, deren Ausgang mit einem Zyklon (14) verbunden ist, der mit einer Einsackungs-Kippeinrichtung (16) verbunden ist.

6. Einrichtung zur Umwandlung von Abfällen nach Anspruch 3,
dadurch gekennzeichnet,
daß am Ausgang der Gasabzugsöffnung (46) jedes Reaktors (8) ein Filter (47) mit einer Gruppe von versetzt angeordneten Ablenklamellen (48) angeordnet ist, welche Lamellen (48) durch Rillen verlaufen, die zu diesem Zweck in einer Platte (49) gebildet sind, die der Wirkung eines verzögerten pneumatischen Kolbens (50) mit der Eignung ausgesetzt ist, der Platte (49) eine Hin- und Herbewegung längs der Lamellen (48) zu verleihen.

7. Einrichtung zur Umwandlung von Abfällen nach Anspruch 3,
dadurch gekennzeichnet,
daß die Wasserkondensatoren (21) einen Ausgang für den nichtkondensierbaren Teil des Gases aufweisen, der zu einem Gaswäscher (24) mündet, der seinerseits mittels symmetrisch angeordneter Vakuumpumpen (25) mit einem Speicher (26) zum Wiederumlauf des Gases verbunden ist, der mittels eines Kompressors (29) mit einem Reservespeicher (26') verbunden ist.

8. Einrichtung zur Umwandlung von Abfällen nach Anspruch 2,
dadurch gekennzeichnet,
daß im Inneren des zylindrischen Drehkörpers (34) jedes Reaktors (8) Öffnungen zum Einspritzen von Druckwasser vorgesehen sind, das aus Dekantierbecken (31) in Serie entnommen wird, in denen das von den Kondensatoren (21) kommende Wasser nach seinem Einlauf in eine Primärreinigungseinheit (30) gekühlt wird, die mit Pflanzenkohle gefüllte Säulen aufweist.

9. Einrichtung zur Umwandlung von Abfällen nach Anspruch 2,
dadurch gekennzeichnet,
daß die äußere feuerfeste Kammer (33) jedes Reaktors (8) Abteile (39) außerhalb der Heizzone aufweist, in denen Träger (38) von Rädern (37) angeordnet sind, die dazu bestimmt sind, in Kontakt mit außerhalb jedes zylindrischen Körpers (34) gelegenen Rollbahnen (36) zu sein, um die Drehung dieses letzteren derart zu ermöglichen, daß diese Räder (37) nicht den hohen Arbeitstemperaturen des Reaktors (8) ausgesetzt sind.

10. Einrichtung zur Umwandlung von Abfällen nach Anspruch 3,
dadurch gekennzeichnet,
daß die Beladungs- und Entleerungsöffnung (45) durch einen Deckel (40) mittels eines Schwungrades (41) geschlossen wird, das Schließzahnstangen (42) **eingreift**, die mit einem Ende (43) in Keilform versehen sind.

11. Einrichtung zur Umwandlung von Abfällen nach Anspruch 5,
dadurch gekennzeichnet,
daß die Öffnung (45) jedes Reaktors (8) mit einer beweglichen, pneumatischen Abzughaube (9) verbun-

12

den ist, die die festen Kohleteilchen in Suspension ansaugt und sie bis zur Mühle (13) nach Durchgang durch ein Filter (15) transportiert.

**12.** Einrichtung zur Umwandlung von Abfällen nach Anspruch 7,
dadurch gekennzeichnet,
daß der Gasspeicher (26) Brenner (27) speist und mit einem Kompressor (29) verbunden ist, um das Gas ab einem vorbestimmten Druckwert zum Speicher (26′) zu fördern, welcher mit einer Sicherheitsausgleichseinrichtung mit automatischer Zündung einer Fackel und einem Kühlsystem durch Berieselung versehen ist.

**13.** Einrichtung zur Umwandlung von Abfällen nach Anspruch 8,
dadurch gekennzeichnet,
daß sie außerdem eine Wasserbehandlungsgruppe (32) aufweist, die aus zwei parallelen, mit Aktivkohle gefüllten Säulen und aus einem Behandlungskasten besteht, die zur Speisung mit dem Überschuß vorbehandelten Wassers bestimmt sind.

**14.** Einrichtung zur Umwandlung von Abfällen nach Anspruch 1,
dadurch gekennzeichnet,
daß in der Anfangszone zur Aufnahme (1) und zur Auswahl (3, 4) der Abfälle eine Einheit (4) zur magnetischen Erfassung vorgesehen ist.

## Claims

**1.** Device for the conversion of residues, comprising at least one reception region (1), one selection region (3, 4), one region for grinding (5, 6) the residues as well as one region for the heat treatment (8) of these residues consisting of several reactors (8), each of which contains heating means (27) and a reactor body (34) which is capable of carrying out a rotatory movement on itself and has an orifice (45), which is capable of being closed, which is used for charging the residues to be converted and for discharging the converted residues, as well as an orifice (46) for extracting the pyrolysis gases,
characterised in that
- each reactor (8) additionally contains an external enclosing chamber (33), as well as its own means of filtering (47), of condensing (18) and of grinding, in order to form an independent modular unit, and in that
- each reactor body (34) is connected to means (25) which make it possible for the process for the thermal conversion of the residues to take place under vacuum.

**2.** Device for the conversion of residues according to Claim 1, characterised in that at least one of the thermal reactors (8) comprises an internal reactor body (34) metallic in nature and of cylindrical form, equipped with internal blades (35) arranged in a helical fashion, and connected to transmission means (37) capable of making it rotate at two different speeds, an external air chamber made of refractory material (33) and enclosing the said cylindrical body (34); burners (27) which heat the air chamber (33) and the said rotating cylindrical body (34), and a group of pumps (25) which ensures vacuum conditions in the said reactor body (34) and the extraction of the pyrolysis gases through the means of filtering (47) and condensing (18) towards a gas tank (26,26′) and/or the burners (27).

**3.** Device for the conversion of residues, according to one of Claims 1 and 2, characterised in that the charging and discharging orifice (45) of each reactor body (34) is combined with corresponding means of transport (7 and 10) of the residues to be converted or of the converted residues and the orifice for gas extraction (46) is connected to a heat exchanger (17) in which the gas arising from the reactor (8) is cooled at the same time as the gas used for feeding the burner (27) is heated; and in that the means for condensing comprise a tar condenser (18) connected to an individual tank (19) which communicates through a valve with a feed tank (20) which is common to all the individual tanks (19); and a water condenser (21) connected to an individual tank (22) which is capable of communicating with a feed tank (23) which is common to all the individual tanks (22).

**4.** Device for the conversion of residues according to Claim 3, characterised in that the means of transport (7) intended for charging the reactor (8) are connected either to a grinder (6) or to a hopper (1) equipped with two rows of rotating wheels provided with conical points for tearing open the rubbish bags; this hopper (1) being combined with a zone (3) for sorting glass and/or plastic materials, a magnetic capture unit (4) and a rubbish grinder (5), the outlets of which emerge on the same conveyor belt (7).

5. Device for the conversion of residues according to Claim 3, characterised in that the means of transport (10) intended for discharging reactors (8) feed a reception hopper (11), the outlet of which emerges on a vibrating sorting screen (12) intended to separate the ferromagnetic components and the other metals from the carbonised material which is capable of being conveyed towards a microniser mill (13), the outlet of which is connected to a cyclone (14) in combination with a bag-filling weighing device (16).

6. Device for the conversion of residues according to Claim 3, characterised in that a filter (47), comprising a series of deflection blades (48) arranged in staggered rows, is situated at the outlet of the orifice for gas extraction (46) of each reactor (8), these blades (48) passing through grooves formed to this end in a plate (49) which is subjected to the action of a time-delayed pneumatic piston (50), which is capable of imparting a to-and-fro movement to the plate (49) along the blades (48).

7. Device for the conversion of residues according to Claim 3, characterised in that the water condensers (21) have an outlet for the noncondensable part of the gas, which emerges towards a gas scrubber (24) communicating, in its turn, via the vacuum pumps (25) arranged symmetrically, with a tank (26) for recirculation of the gas, connected via a compressor (29) to a reserve tank (26′).

8. Device for the conversion of residues according to Claim 2, characterised in that, inside the rotating cylindrical body (34) of each reactor (8), orifices are provided for the injection of water, under pressure, extracted from pools (31) for in series separation, in which the water arising from the condensers (21) is cooled after its passage through a primary purification unit (30) which consists a columns filled with vegetable charcoal.

9. Device for the conversion of residues according to Claim 2, characterised in that the refractory external chamber (33) of each reactor (8) has enclosures (39) outside the heating region , in which supports (38) for wheels (37) are arranged, the wheels being intended to be in contact with bearing tracks (36) situated on the outside of each cylindrical body (34) in order to allow the rotation of the latter; in such a way that these wheels (37) are not subjected to the high working temperatures of the reactor (8).

10. Device for the conversion of residues according to Claim 3, characterised in that the charging and discharging orifice (45) is closed with a cover (40) by means of a rotating hand wheel (41) which generates closure toothed racks (42), which are wedge-shaped at one end (43).

11. Device for the conversion of residues according to Claim 5, characterised in that the orifice (45) of each reactor (8) is combined with a movable bell for pneumatic extraction (9) which draws off the solid particles of the carbon in suspension and transports them to the mill (13) after passing through a filter (15).

12. Device for the conversion of residues according to Claim 7, characterised in that the gas tank (26) feeds burners (27) and is combined with a compressor (29) to transfer the gas, from a predetermined pressure value, towards the tank (26′), which is equipped with a safety adjusting device with automatic ignition of a torch, and a system for spray cooling.

13. Device for the conversion of residues according to Claim 8, characterised in that it additionally comprises a water treatment group (32) consisting of two parallel columns filled with active charcoal and of a treatment vessel, intended to be fed with the surplus of pretreated water.

14. Device for the conversion of residues according to Claim 1, characterised in that, in the initial reception (1) and selection (3, 4) region of the residues, a magnetic capture unit (4) is provided.

Fig.1

EP 0 324 668 B1

Fig.2

Fig.3

EP 0 324 668 B1

Fig.4

Fig.5

Fig.6

Fig.7

Fig.8

Fig.9

Fig.10

Fig.11

33

37

38 39

37

37

EP 0 324 668 B1

EP 0 324 668 B1

# Fig.12

# Fig.13

19

## Fig.14

## Fig.15